# EUROPÄISCHE PATENTSCHRIFT

(11) **EP 2 355 609 B1**
(45) Veröffentlichungstag und Bekanntmachung des Hinweises auf die Patenterteilung: **29.11.2017**
(21) Anmeldenummer: 11001026.1
(22) Anmeldetag: 09.02.2011
(51) Int. Cl.: H04W 76/02

(54) **VERFAHREN ZUR STEUERUNG EINES NETZWERKSYSTEMS, NETZWERKSYSTEM UND COMPUTERPROGRAM**
METHOD FOR CONTROLLING A NETWORK SYSTEM, NETWORK SYSTEM AND COMPUTER PROGRAM
PROCÉDÉ DE COMMANDE D'UN SYSTÈME DE RÉSEAU, SYSTÈME DE RÉSEAU ET PROGRAMME INFORMATIQUE

(30) Priorität: 10.02.2010 DE 102010007670
(43) Veröffentlichungstag der Anmeldung: 10.08.2011
(73) Patentinhaber: Phoenix Contact GmbH & Co. KG, 32825 Blomberg (DE)
(72) Erfinder: Pape, Andreas, 33034 Brakel (DE); Weczerek, Jürgen, 32825 Blomberg (DE)
(74) Vertreter: Kampfenkel, Klaus

(56) Entgegenhaltungen:
- EP-A1- 2 034 779
- DE-A1-102005 053 501
- Task ET AL: "Work Package 1 System Architecture Architectural Design and Specification Preliminary System Design and Architecture Report Project co-ordination : OEAW FISS, 2700 Wr.Neustadt Viktor Kaplanstrasse 2", , 25. März 2009 (2009-03-25), XP055115840, Gefunden im Internet: URL:http://www.iiss.oeaw.ac.at/flexware/do cuments/deliverables/d1_2.pdf [gefunden am 2014-04-29]

## Beschreibung

Die Erfindung betrifft ein Verfahren zur Steuerung eines Netzwerksystems, ein Netzwerksystem sowie ein Computerprogramm.

In industriellen Automatisierungsnetzen ist eine Schicht-2-transparente Kommunikation zwischen an Clients angeschlossenen Geräten, beispielsweise Eingabe/Ausgabe-Stationen, Antriebsvorrichtungen oder Kameras, und einer Steuerung im Netzwerk hinter einer drahtlosen Netzwerkinfrastruktur mit Access Points erforderlich. Unter Schichten sind im Folgenden die Schichten des OSI (Open Systems Interconnection Reference)-Schichtenmodells der Internationalen Organisation für Normung (ISO) gemeint, insbesondere wenn es sich hierbei um Profinet oder ähnliche Echtzeit-Ethernet-Systeme handelt. Da es keinen eindeutigen Standard in Bezug auf die transparente Schicht-2-Kopplung von Netzwerken gibt, hat jeder Hersteller von Netzwerkgeräten seine eigene herstellerspezifische Lösung dafür. Das bedeutet aber, dass ein Kunde nur Clients und Access Points von ein- und demselben Hersteller verwenden kann.

Nachteilig ist weiterhin, dass übliche Büro-WLAN-Systeme gar keine Unterstützung für Netzwerke mit Clients, an welchen Geräte angeschlossen sind, bieten, weil in den üblichen Büro-WLAN-Systemen die Clients immer als Endteilnehmer der Kommunikation gesehen werden (beispielsweise Notebooks oder Mobiltelefone).
Aus EP 2 034 779 A1 sind Client-Server-Tunnel bekannt, wobei ein Verfahren für einen heterogenen, kabellosen, mobilen ad-hoc-Dienst für die Bereitstellung eines Internetzugangs beschrieben wird. Dabei bauen an ein Weitverkehrsfunknetz (WWAN) angeschlossene, als Ad-hoc-Service Provider bezeichnete Endgeräte ein Ad-hoc-Netzwerk in ihrer Umgebung auf, um auf diese Weise ihren Internet-Zugang auf mobile Clients, die keinen direkten Zugang zum WWAN haben, zu erweitern, wobei zwischen einem Server und jedem mobilen Client über den jeweiligen Ad-hoc-Service Provider ein Tunnel aufgebaut wird, über den verschiedene Services bereitgestellt werden. "Flexware - Work Package 1 System Architecture Architectural Design and Specification Preliminary System Design and Architecture Report" http://www.iiss.oeaw.ac.at/flexware/documents/deliverables/ d1_2.pdf offenbart ein Netzwerksystem, in dem Tunnel zur Kontrolle und Datenübertragung mit Stationen benutzt werden.

Aufgabe der Erfindung ist es daher, ein Verfahren zur Steuerung eines Netzwerksystems und ein Netzwerksystem zu schaffen, welche die obigen Nachteile überwinden und insbesondere eine transparente Schicht-2-Kopplung herstellerunabhängig ermöglichen.
Die obige Aufgabe wird gelöst mittels eines Verfahrens nach Anspruch 1 und mittels eines Netzwerksystems nach Anspruch 6. Vorteilhafte Ausgestaltungen der Erfindung sind Gegenstand von abhängigen Unteransprüchen.

Demgemäß wird ein Verfahren zur Steuerung eines Netzwerksystems bereitgestellt, wobei das Netzwerksystem ein drahtloses Netzwerk, mit welchem ein Client drahtlos verbunden ist, und ein mit dem drahtlosen Netzwerk verbundenes Backbone-Netzwerk umfasst, mit den folgenden Schritten:
- Aufbauen eines Tunnels zwischen einer mit dem Backbone-Netzwerk verbundenen Clientsteuereinrichtung und dem Client zum Übermitteln von Daten zwischen der Clientsteuereinrichtung und dem Client;
- Senden einer Statusinformation von dem Client an die Clientsteuereinrichtung über den Tunnel;
- Auswerten der übermittelten Statusinformation mittels der Clientsteuereinrichtung und
- Senden eines von der ausgewerteten Statusinformation abhängigen Steuersignals zum Steuern des Clients von der Clientsteuereinrichtung an den Client über den Tunnel.

Das oben genannte technische Problem wird ebenfalls durch die Merkmale des Anspruchs 6 gelöst. Demgemäß wird ein Netzwerksystem bereitgestellt, mit:
- einem Client und einer Clientsteuereinrichtung,
- wobei der Client und die Clientsteuereinrichtung Mittel zum Aufbauen eines Tunnels zum Übermitteln von Daten zwischen dem Client und der Clientsteuereinrichtung und jeweils eine Sendeeinrichtung zum Senden von Daten und eine Empfangseinrichtung zum Empfangen von Daten umfassen, wobei der Client eine Erfassungseinrichtung zum Erfassen einer Statusinformation und die Clientsteuereinrichtung eine Auswerteeinrichtung zum Auswerten der Statusinformation aufweisen und die Auswerteeinrichtung ferner derart konfiguriert ist, Steuersignale zum Steuern des Clients abhängig von der ausgewerteten Statusinformation zu erzeugen.
Des Weiteren wird ein Computerprogramm mit Programmcode zur Ausführung des erfindungsgemäßen Verfahrens geschaffen, wobei das Computerprogramm auf einem Computer ausgeführt wird.
Zweckmäßigerweise findet also eine Steuerung von einem Client, welcher Teil eines drahtlosen Netzwerks ist zentral durch eine an das Backbone-Netzwerk angeschlossene Clientsteuereinrichtung statt. Das drahtlose Netzwerk ist hierbei an ein Backbone-Netzwerk angeschlossen. Eine solche Clientsteuereinrichtung kann auch als ein Wireless-Client-Controller (WCC) bezeichnet werden. Die Steuerung wird abhängig von einer ausgewerteten Statusinformation durchgeführt, wobei die Statusinformation zuvor vom Client an die Clientsteuereinrichtung über den aufgebauten Tunnel übermittelt wurde. Die zentrale Steuerung mittels der Clientsteuereinrichtung ermöglicht somit in vorteilhafter Weise, dass mehrere Clients von unterschiedlichen Herstellern in einem drahtlosen Netzwerk zusammengeschaltet werden können. Bei dem drahtlosen Netzwerk kann es sich insbesondere um WLAN oder um ein Bluetooth-Netzwerk handeln, wobei auch andere drahtlose Netzwerkübertragungstechniken zum Einsatz kommen können.

Vorteilhafter Weise wird der Tunnel zwischen der Clientsteuereinrichtung und dem Client auf der Schicht-3-Ebene aufgebaut. Beispielsweise kann es sich bei dem Tunnel um einen UDP/TCP-Tunnel handeln, insbesondere ist der Tunnel ein VPN-Tunnel. Zweckmäßigerweise kommuniziert der Client mit der Clientsteuereinrichtung mittels TCP/IP und / oder UDP/IP. Nach einer bevorzugten Ausgestaltung der Erfindung umfasst ein Übertragungsprotokoll, mittels welchem Daten von dem Client zu der Clientsteuereinrichtung und umgekehrt übermittelt werden, das Point-to-Point-Tunneling-Protokoll (PPTP) und/oder das Internet Protocol Security (IPsec). Der Tunnel kann auch als eine Tunnelverbindung bezeichnet werden.

Nach dem Aufbauen des Tunnels zwischen der Clientsteuereinrichtung und dem Client sendet der Client eine Statusinformation an die Clientsteuereinrichtung über den Tunnel. Bei der Statusinformation kann es sich beispielsweise um Bitfehlerraten, Paketwiederholungen oder die Anzahl an sichtbaren Access Points des drahtlosen Netzwerks oder RSSI (Received Signal Strength Indication)-Werte handeln. Vorzugsweise können Statusinformationen auch von der Clientsteuereinrichtung an den Client gesendet werden. Die übermittelte Statusinformation wird dann mittels der Clientsteuereinrichtung ausgewertet, worauf diese dann basierend auf der ausgewerteten Statusinformation Entscheidungen für eine Koordination des Clients ableitet und diesen dann entsprechend steuert. Hierzu wird ein von der ausgewerteten Statusinformation abhängiges Steuersignal an den Client über den Tunnel gesendet, um den Client mittels des Steuersignals zu steuern. Beispielsweise kann eine Sendeleistung des Clients, eine Roaming-Schwelle, ein Verbindungsaufbau und - abbau zu Access Points oder die zu verwendenden Modulationsarten gesteuert werden.

Die Steuerung des Clients mittels einer Clientsteuereinrichtung bietet gegenüber dem bekannten Stand der Technik mehrere Vorteile, welche im Folgenden näher beschrieben werden.

Im Stand der Technik muss ein Client selbstständig die Entscheidung treffen, ob und wann er auf einen besser erreichbaren Access Point wechselt, also roamt. Insbesondere wenn mehrere Clients mit dem drahtlosen Netzwerk verbunden sind, kann mittels einer zentralen Koordination sämtlicher Clients jedem einzelnen Client individuell seine Roaming-Entscheidung abgenommen werden, insbesondere kann das einzelne Roaming getriggert werden, weil zu jedem Zeitpunkt ein genaues Bild über die Informationen aller Clients über die gesamte Anwendung (RSSI-Werte oder Paketfehlerraten) und das gesamte drahtlose Netzwerk vorliegt. Die Erfassung aller im drahtlosen Netzwerk relevanten Statusinformationen der Clients an einer zentralen Stelle, nämlich der Clientsteuereinrichtung, stellt somit ein "Online" Site-Survey aus Sicht eines Netzwerknutzers und nicht wie bei üblichen Steuereinrichtungen eines drahtlosen Netzwerkes aus Sicht der Access Points dar. Die Statusdaten können auch als Client-Daten bezeichnet werden. Bei den üblichen Steuereinrichtungen eines drahtlosen Netzwerkes wie zum Beispiel ein WLAN-Netzwerk kann es sich insbesondere um einen WLAN-Controller handeln.

Vorzugsweise kann das Netzwerksystem auch mit einer üblichen Steuereinrichtung für drahtlose Netzwerke gekoppelt werden, insbesondere mit einem WLAN-Controller, so dass die Clientsteuereinrichtung mit der Steuereinrichtung für drahtlose Netzwerke, also insbesondere mit dem WLAN-Controller für eine Kommunikation gekoppelt ist. Eine solche Kopplung ermöglicht in vorteilhafter Weise, dass die Clientsteuereinrichtung von der Steuereinrichtung für ein drahtloses Netzwerk vorgenommene Änderungen an der Infrastruktur des drahtlosen Netzwerks, insbesondere an der WLAN-Access Point Infrastruktur, auch an die von ihm verwalteten Clients weitergeben und somit auf dynamische Änderungen im drahtlosen Netzwerk reagieren kann. Bei den Änderungen kann es sich beispielsweise um einen Kanalwechsel oder eine Anpassung von Sendeleistungen handeln. Solche Änderungen führen im Stand der Technik bei den Clients zu einer erheblichen Veränderung des Roaming-Verhaltens, da nun jeder Client einzeln die neue Situation, beispielsweise aufgrund einer Änderung bei der Ausleuchtung des drahtlosen Netzwerks, insbesondere einer WLAN-Ausleuchtung, lernen und seine Roaming-Entscheidungen anpassen muss. Dieses erfordert bei jedem einzelnen Client viel Zeit, was folglich die Echtzeitfähigkeit des gesamten Netzwerksystems negativ beeinflusst. Über die erfindungsgemäße zentrale Koordination und Steuerung mittels der Clientsteuereinrichtung stehen die Erfahrungen und die Kenntnisse eines Clients sofort allen weiteren Clients zur Verfügung, da der Client erfindungsgemäß über den aufgebauten Tunnel diese Statusinformation an die Clientsteuereinrichtung sendet. Somit können auch von einer Steuereinrichtung für drahtlose Netzwerke initiierte Veränderungen im drahtlosen Netzwerk somit allen Clients zeitgleich zur Verfügung gestellt werden. Die Erfindung ermöglicht somit in vorteilhafter Weise ein echtzeitfähiges Netzwerksystem.

Ein weiterer Vorteil der Erfindung zeigt sich in üblichen WLAN-Infrastrukturen, in welchen eine Lastverteilung von Clients auf mehrere Access Points nur über die Konfiguration der Access Points vorgesehen ist. Die Access Points entscheiden dann, ob sich weitere Clients an dem drahtlosen Netzwerk anmelden dürfen bzw. wie sogenannte Quality of Service (QoS)-Parameter für die WLAN-Kommunikation vergeben werden. Hierbei haben die Access Points allerdings nur eine eingeschränkte Kenntnis bezüglich der eigentlichen Anwendung, das heißt welche spezifischen Geräte, beispielsweise Kameras, Eingabe/Ausgabe-Stationen oder Antriebsvorrichtungen gesteuert werden. Hier ermöglicht die Erfindung ein Clientbasierte Lastverteilung (Load Balancing), indem die Clients Statusinformation zentral an die Clientsteuereinrichtung übermitteln, was insofern effizienter ist, weil die Clients die eigentlichen Lastverursacher sind. Ferner erlaubt die zentrale Koordination und Steuerung der Clients über die Clientsteuereinrichtung eine wesentlich applikationsnähere Koordination aller Teilnehmer des drahtlosen Netzwerkes, insbesondere WLAN-Teilnehmer, die in industriellen Applikationen wie beispielsweise die Fördertechnik durchaus eine größere Anzahl einheitlicher Gerätetypen annehmen kann.

Weiterhin ermöglicht die Erfindung ein unterbrechungsfreies Roaming, da die Clientsteuereinrichtung den Client derart steuern kann, dass Handover-Zeiten eines Clients durch eine neue Suche eines besser erreichbaren Access Points sowie einer Authentifizierung und Assoziierung zu einem Access Point vermieden werden. Aufgrund der Kenntnis der Clientsteuereinrichtung bezüglich der drahtlosen Netzwerkinfrastruktur kann die Clientsteuereinrichtung entsprechende Steuersignale an den Client senden. Die Clientsteuereinrichtung erlangt insbesondere Kenntnis bezüglich der drahtlosen Netzwerkinfrastruktur aufgrund der von dem Client übermittelten Statusinformation und/oder aufgrund von mittels einer Steuereinrichtung für drahtlose Netzwerke, beispielsweise eines WLAN-Controllers, an die Clientsteuereinrichtung übermittelten Daten.

In einer vorteilhaften Ausgestaltung kann vorgesehen sein, dass die Clientsteuereinrichtung Ethernettelegramme und/oder Ethernetpakete zwischen dem Client und dem Backbone-Netzwerk über den Tunnel übermittelt. Insbesondere brückt (bridging) die Clientsteuereinrichtung Ethernettelegramme und/oder Ethernetpakete von den Clients und/oder von den an den Clients angeschlossenen Ethernetteilnehmern in das Backbone-Netzwerk auf ISO-Schicht 2. Vorzugsweise stellt die Clientsteuereinrichtung Telegramme, insbesondere Ethernettelegramme, aus dem Backbone-Netzwerk über die Tunnel an die Clients und/oder an die an die Clients angeschlossenen Ethernetteilnehmer zu. Hierbei entsprechen die einzelnen Tunnelendpunkte logisch gesehen Bridge-Ports eines Switches. Die Clientsteuereinrichtung stellt logisch gesehen einen Switch mit den Tunnelendpunkten als Switchports dar, wobei im Gegensatz zu einem üblichen Switch die Clientsteuereinrichtung so genannte Loops, das heißt welche Clients sind beispielsweise aus Roaming- oder Redundanzgründen miteinander gekoppelt, insbesondere auf Ethernet-Ebene, das heißt auf Schicht-2-Ebene, auflösen und die daraus gewonnene Information effizient für eine Steuerung der Clients verwenden kann.

In einer anderen bevorzugten Ausführungsform der Erfindung kann vorgesehen sein, dass die zu übermittelnden Daten zwischen der Clientsteuereinrichtung und dem Client zyklisch übermittelt werden. Vorzugsweise kann eine Zykluszeit mittels der Clientsteuereinrichtung eingestellt werden. Es kann aber insbesondere auch vorgesehen sein, dass die Zykluszeit manuell vorgegeben wird.

In noch einer anderen bevorzugten Ausgestaltung der Erfindung optimiert die Clientsteuereinrichtung automatisch die Zykluszeit, insbesondere durch Berücksichtigung der aktuell zur Verfügung stehenden Bandbreite der drahtlosen Verbindung zu dem Client. In einer anderen beispielhaften Ausführungsform der Erfindung kann vorgesehen sein, dass die Zykluszeit fest über eine Automatisierungsapplikation, beispielsweise Profinet, eingestellt wird, wobei die Clientsteuereinrichtung insbesondere eine Sendeleistung oder eine Roamingschwelle in dem Client zur Sicherstellung der Zykluszeit im laufenden Betrieb anpasst.

Nach einer weiteren bevorzugten Ausführungsform der Erfindung können die zu übermittelnden Daten in einen Datenframe zusammengepackt werden. Ein solches Zusammenpacken von Daten in einen Datenframe wird auch Packet Aggregation genannt. Der Datenrahmen, in welchem die zu übermittelnden Daten gepackt werden, kann auch als ein Tunnelframe bezeichnet werden. Insbesondere werden mehrere Ethernetpakete in einen Datenframe oder -rahmen zusammengepackt. Somit können mehrere Daten, insbesondere Ethernetpakete, gemeinsam übertragen werden. Mittels des erfindungsgemäßen Packet Aggregations wird in der Kommunikation zwischen der Clientsteuereinrichtung und dem Client und/oder einem an dem Client angeschlossenen Ethernetteilnehmer oder Endteilnehmer ein geringer Jitter erreicht, insbesondere wenn die zu übermittelnden Daten zwischen der Clientsteuereinrichtung und dem Client zyklisch übermittelt werden, das heißt, dass der Tunnel zwischen der Clientsteuereinrichtung und dem Client zyklisch arbeitet.

Nach einer weiteren beispielhaften Ausgestaltung der Erfindung wird den zu übermittelnden Daten eine Priorität zugewiesen und die Daten werden abhängig von ihrer Priorität übermittelt. Insbesondere kann die Priorität einen Quality of Service (QoS)-Parameter umfassen. Vorzugsweise werden Daten mit einer hohen Priorität, das heißt hochpriore Pakete, insbesondere kann es sich um Ethernetpakete handeln, bevorzugt im Vergleich zu niederprioren Paketen, das heißt Pakete mit einer niedrigen Priorität. Es kann insbesondere auch vorgesehen sein, die hochprioren und/oder niederprioren Pakete fragmentiert zu übertragen. Bei den hochprioren Paketen kann es sich beispielsweise um Profinet-Pakete handeln. Insbesondere handelt es sich bei den niederprioren Paketen um http-Pakete oder Pakete bezüglich eines Dateidownloads.

In einer weiteren beispielhaften Ausgestaltung der Erfindung kann vorgesehen sein, dass mindestens ein weiterer Client mit dem drahtlosen Netzwerk verbunden und ein weiterer Tunnel zwischen der Clientsteuereinrichtung und dem weiteren Client zum Übermitteln von Daten zwischen der Clientsteuereinrichtung und dem weiteren Client aufgebaut werden. Auch der weitere Client bzw. die weiteren Clients werden zentral von der Clientsteuereinrichtung gesteuert, indem die Clientsteuereinrichtung Steuersignale zum Steuern dieser Clients an die Clients über die jeweiligen Tunnel sendet, wobei die Steuersignale abhängig sind von ausgewerteten Statusinformationen, welche von den jeweiligen Clients an die Clientsteuereinrichtung gesendet werden. Somit wird in vorteilhafter Weise ein redundantes Netzwerk geschaffen. Insbesondere trifft die Clientsteuereinrichtung die Entscheidung, welcher Tunnelport gebrückt bzw. gebridgt und welcher geblockt wird, aufgrund der übermittelten Statusinformation, welche beispielsweise Diagnosedaten des jeweiligen Clients bezüglich der drahtlosen Netzwerkverbindung umfassen können. Insbesondere dadurch, dass die Daten der einzelnen Clients zentral in der Clientsteuereinrichtung erfasst und gesammelt und ausgewertet werden, kann eine zentrale applikationsnahe Lastverteilung, auch Load Balancing genannt, sämtlicher Clients über die gesamte drahtlose Netzwerkstruktur erreicht werden. Es ist mittels der Erfindung also insbesondere möglich, ein Netzwerk mit mehreren Clients effizient zu steuern. An dieser Stelle soll angemerkt werden, dass die obigen beispielhaften Ausgestaltungen der Erfindung, insofern diese nur mit einem Client beschrieben wurden, auch mit mehreren Clients durchgeführt werden können.

Nach einer weiteren bevorzugten Ausführungsform der Erfindung kann vorgesehen sein, dass ein Endteilnehmer mit dem Client und mit dem weiteren Client verbunden wird zum Übermitteln von Daten zwischen dem Endteilnehmer und dem Backbone-Netzwerk über die beiden Tunnel, wobei die Clientsteuereinrichtung zumindest einen der beiden Tunnel für eine Übermittlung von Daten freischaltet. Vorzugsweise kann der Endteilnehmer ein Ethernetteilnehmer sein. Beispielsweise können auch mehrere Endteilnehmer und mehrere Clients vorgesehen sein. Das Verbinden eines Endteilnehmers mit mehreren Clients erhöht in vorteilhafter Weise eine Verfügbarkeit einer automatisierungstechnischen drahtlosen Applikation, da so mehrere redundante Datenkanäle geschaffen sind. Vorzugsweise werden die Clients bei redundanter Funkausleuchtung auch mit mehreren Access Points verbunden. Hierbei entscheidet die Clientsteuereinrichtung abhängig von Diagnosedaten oder Qualitätsdaten, welche der redundanten Tunnelverbindungen für eine Kommunikation des Netzwerkes hinter den redundanten Clients und dem Backbone-Netzwerk hinter den Access Points freigeschaltet wird. Abhängig von dieser Entscheidung sendet dann die Clientsteuereinrichtung entsprechende Steuersignale an die jeweiligen Clients. Die Tunnelendpunkte in der Clientsteuereinrichtung entsprechen dabei logisch gesehen Switch-Ports. Vorzugsweise können die Statusinformationen, welche von den einzelnen Clients an die Clientsteuereinrichtung über den Tunnel gesendet werden, RSSI (Received Signal Strength Indication)-Werte umfassen, so dass die Clientsteuereinrichtung eine Information bezüglich der Infrastruktur des drahtlosen Netzwerkes, beispielsweise eine Funkausleuchtung, auswerten kann. Vorzugsweise umfasst die Clientsteuereinrichtung Mittel zu einem zentralen Client-seitigen Online-Site-Survey.

In einer beispielhaften Ausgestaltung des erfindungsgemäßen Netzwerksystems umfasst der Client Mittel zum Anpassen einer Switching-Tabelle eines Switches. Somit ist es ermöglicht, dass im Falle eines Umschaltens eines Tunnels aus Roaming- oder Redundanzgründen, den Switch zum Anpassen seiner Switching-Tabelle oder -Tabellen zu zwingen. Das kann beispielsweise durch ein kurzzeitiges Link-Down des Clients geschehen, dessen Tunnelport durch die Clientsteuereinrichtung für ein Bridging in das Backbone-Netzwerk geschlossen wurde.

In einer weiteren bevorzugten Ausgestaltung des erfindungsgemäßen Netzwerksystems umfasst der Client Verbindungsmittel zum Verbinden des Clients mit einem Netzwerk, insbesondere einem drahtlosen Netzwerk wie beispielsweise ein WLAN-Netzwerk oder ein bluetooth-Netzwerk. Das Netzwerk kann aber auch ein kabelgebundenes Netzwerk sein. Es kann sich bevorzugterweise bei dem Netzwerk auch um ein Backbone-Netzwerk handeln. In einer beispielhaften Ausführungsform können die Verbindungsmittel den Client sowohl mit dem Backbone-Netzwerk als auch mit einem weiteren kabelgebundenen und / oder einem weiteren drahtlosen Netzwerk verbinden. Nach einer weiteren bevorzugten Ausgestaltung der Erfindung kann die Clientsteuereinrichtung analog zum Client entsprechende Verbindungsmittel zum Verbinden der Clientsteuereinrichtung mit einem Netzwerk umfassen. Bevorzugterweise ist der Client mit einem drahtlosen Netzwerk, insbesondere mit einem WLAN- oder einem bluetooth-Netzwerk, verbunden, wobei das drahtlose Netzwerk mit einem Backbone-Netzwerk verbunden ist und die Clientsteuereinrichtung ebenfalls mit dem Backbone-Netzwerk verbunden ist. Insbesondere kann das Backbone-Netzwerk weitere kabellose und / oder weitere kabelgebundene Netzwerke umfassen. Nach noch einer anderen beispielhaften Ausführungsform der Erfindung sind an dem Backbone-Netzwerk eine SPS (Speicherprogrammierbare Steuerung)-Vorrichtung und / oder ein Endteilnehmer angeschlossen.

Gemäß einer beispielhaften Ausgestaltung des erfindungsgemäßen Computerprogramms ist das Computerprogramm in einer Firmware des Clients und / oder der Clientsteuereinrichtung implementiert.

Die Erfindung wird im Folgenden anhand von Ausführungsbeispielen unter Bezugnahme auf eine Figur näher erläutert.

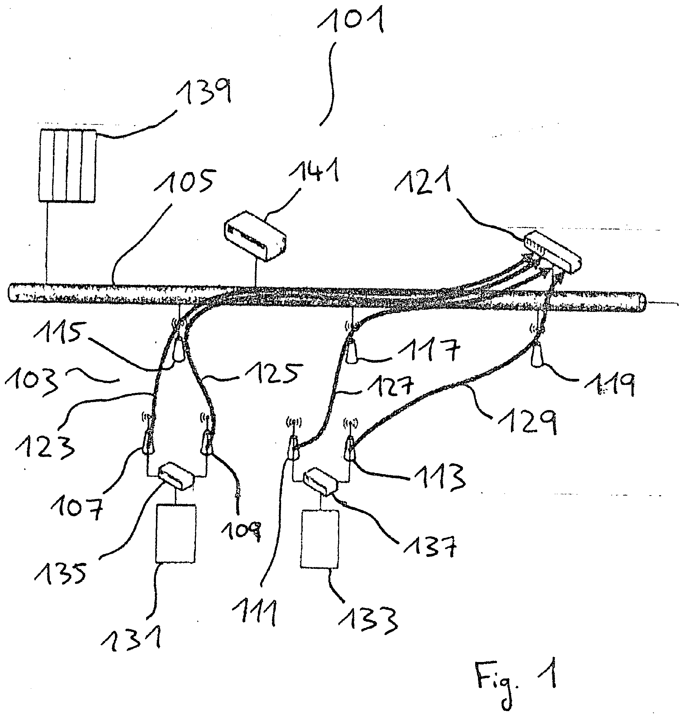

Fig. 1 zeigt ein Netzwerksystem 101 nach einem Ausführungsbeispiel der Erfindung. Das Netzwerksystem 101 umfasst ein drahtloses Netzwerk 103, welches mit einem Backbone-Netzwerk 105 verbunden ist. Das drahtlose Netzwerk 103 umfasst mehrere Clients 107, 109, 111 und 113. Die Clients 107, 109, 111, 113 sind mittels mehrerer Access Points 115, 117 und 119 mit dem Backbone-Netzwerk 105 verbunden. Weiterhin ist an dem Backbone-Netzwerk 105 eine Clientsteuereinrichtung 121 angeschlossen. Obwohl hier nicht gezeigt, können auch mehr als drei Access Points vorgesehen sein. In einer anderen nicht gezeigten Ausgestaltung der Erfindung können auch weniger als drei Access Points vorgesehen sein.

Zwischen den Clients 107, 109, 111 und 113 und der Clientsteuereinrichtung 121 ist jeweils ein Tunnel 123, 125, 127 und 129 aufgebaut. Über die Tunnel 123, 125, 127 und 129 können Daten zwischen den entsprechenden Clients 107, 109, 111, 113 und der Clientsteuereinrichtung 121 übermittelt werden. Die Tunnel 123, 125, 127 und 129 können auch als Tunnelverbindungen bezeichnet werden.

An die Clients 107 und 109 ist ein Endteilnehmer 131 angeschlossen und an die Clients 111 und 113 ein Endteilnehmer 133. Die Endteilnehmer 131 und 133 sind jeweils mittels eines Switches 135 und 137 an die Clients 107 und 109 bzw. an die Clients 111 und 113 angeschlossen. Somit ist jeder Endteilnehmer 131 und 133 über zwei Tunnelverbindungen 123 und 125 bzw. 127 und 129 mit der Clientsteuereinrichtung 121 redundant verbunden. Obwohl hier nicht gezeigt, können in einem anderen bevorzugten Ausführungsbeispiel der Erfindung noch weitere Clients an den Switch 135 bzw. 137 vorgesehen sein, so dass mehr als zwei redundante Tunnelverbindungen zwischen dem Endteilnehmer 131 bzw. 133 aufgebaut werden kann. Auch kann in einem nicht gezeigten Ausführungsbeispiel vorgesehen sein, mehrere Endteilnehmer an einen Switch anzuschliessen. Es kann auch vorgesehen sein, einen Endteilnehmer an mehr als einen Switch anzuschliessen.

Die Tunnelverbindungen 123 und 125 laufen über den Access Point 115 zu der Clientsteuereinrichtung 121, der Tunnel 127 läuft über den Access Point 117 zu der Clientsteuereinrichtung 121 und der Tunnel 129 läuft über den Access Point 119 zu der Clientsteuereinrichtung 121.

Weiterhin sind an dem Backbone-Netzwerk 105 noch eine SPS (Speicherprogrammierbare Steuerung)-Vorrichtung 139 und ein weiterer Endteilnehmer 141 angeschlossen.

Die Clientsteuereinrichtung 121 empfängt die von den Clients 107, 109, 111 und 113 gesendeten Statusinformationen. Beispielsweise können die Statusinformationen eine Stabilität bezüglich der Funkverbindung zwischen den Clients 107, 109, 111 und 113 und den Access Points 115, 117 und 119 umfassen. Abhängig hiervon kann dann die Clientsteuereinrichtung 121 die einzelnen Tunnel freischalten bzw. blockieren. Wenn beispielsweise der Client 107 der Clientsteuereinrichtung 121 signalisiert, dass eine Funkverbindung zwischen dem Client 107 und dem Access Point 115 instabil ist, wird die Clientsteuereinrichtung 121 den Tunnel 123 blockieren und stattdessen den Tunnel 125 für eine Übermittlung von Daten zwischen dem Endteilnehmer 131 und dem Backbone-Netzwerk 105 freischalten.

Weiterhin können die Clients 107, 109, 111, 113 beispielsweise der Clientsteuereinrichtung 121 Statusinformationen bezüglich einer Funkausleuchtung des drahtlosen Netzwerks 103 übermitteln, so dass die Clientsteuereinrichtung 121 basierend auf einer Auswertung dieser übermittelten Statusinformationen Kenntnis von der Netzwerkinfrastruktur hat. Die Clientsteuereinrichtung 121 weiss also, dass der Access Point 117 weiter vom Client 113 angeordnet ist als der Access Point 119. Die Clientsteuereinrichtung kann nun Steuersignale an den Client 113 senden, so dass der Client 113 entweder seine Sendeleistung erhöht oder auf den Access Point 117 roamt. Insbesondere wenn der Client 113 auf den Access Point 117 roamt, blockt die Clientsteuereinrichtung 121 den Tunnel 129, so dass keine Daten mehr über den Tunnel 129 gesendet werden, sondern über den Tunnel 127. Damit wird insbesondere sichergestellt, dass es immer eine Datenverbindung zwischen dem Endteilnehmer 133 und der Clientsteuereinrichtung 121 gibt. Im Stand der Technik könnte der Client 113 genau zu dem Zeitpunkt auf den Access Point 117 roamen, wenn der Tunnel 127 noch gar nicht geöffnet ist, so dass die Gefahr besteht, dass Daten verloren gehen können. Mittels der Erfindung wird aber in vorteilhafter Weise ein solcher Datenverlust vermieden, insbesondere dadurch, dass die Clientsteuereinrichtung 121 die Clients 107, 109, 111, 113 zentral steuert und koordiniert.

### Bezugszeichen

- **101**: Netzwerksystem
- **103**: drahtloses Netzwerk
- **105**: Backbone-Netzwerk
- **107, 109, 111, 113**: Clients
- **115, 117, 119**: Access Points
- **121**: Clientsteuereinrichtung
- **123, 125, 127, 129**: Tunnel
- **131, 133**: Endteilnehmer
- **135, 137**: Switch
- **139**: SPS-Vorrichtung
- **141**: weiterer Endteilnehmer

## Patentansprüche

1. Verfahren zur Steuerung eines Netzwerksystems (101), wobei das Netzwerksystem (101) ein mehrere Access Points aufweisendes drahtloses Netzwerk (103) umfasst, mit dem ein oder mehrere Clients (107, 109, 111, 113) drahtlos verbunden sind,
sowie ein Backbone-Netzwerk (105), an das die Access Points und eine Clientsteuereinrichtung angeschlossen sind, mit den folgenden Schritten:
- Aufbauen von Tunneln (123, 125, 127, 129) zwischen der Clientsteuereinrichtung (121) und jeweils einem Client (107, 109, 111, 113) über das Backbone-Netzwerk (105), über einen der Access Points und über das drahtlose Netzwerk zum Übermitteln von Daten,
- Empfangen durch die Clientsteuereinrichtung vom vom Client durch den Tunnel übertragenen Ethernettelegrammen und/oder Ethernetpaketen und Brücken der Ethernettelegramme und/oder Ethernetpakete in das Backbone-Netzwerk;
- Empfangen durch die Clientsteuereinrichtung von Ethernettelegrammen aus dem Backbone-Netzwerk und Zustellen der Ethernettelegramme an den Client durch den Tunnel;
wobei die Clientsteuereinrichtung logisch gesehen einen Switch mit einem Tunnelendpunkt als Switchport darstellt,
- Senden von Statusinformation von dem Client (107, 109, 111, 113) an die Clientsteuereinrichtung (121) über den Tunnel (123, 125, 127, 129)
- Auswerten der übermittelten Statusinformation mittels der Clientsteuereinrichtung (121)
- Senden eines von der ausgewerteten Statusinformation abhängigen Steuersignals zum Steuern einer Sendeleistung des Clients (107, 109, 111, 113), einer Roaming-Schwelle oder der zu verwendenden Modulationsarten des Clients (107, 109, 111, 113) von der Clientsteuereinrichtung (121) an den Client (107, 109, 111, 113) über den Tunnel (123, 125, 127, 129);
- Verbinden eines Endteilnehmers (131, 133) zu mindestens zwei Clients und damit über die entsprechenden mindestens zwei Tunnel mit der Clientsteuereinrichtung (121);
- Entscheidung, durch die Clientsteuereinrichtung zur Freischaltung einer der redundanten Tunnelverbindungen auf Basis von Diagnosedaten oder Qualitätsdaten zum Übertragen von Daten vom Endteilnehmer an einen Empfänger im Backbone-Netzwerk;
- Senden von Steuersignalen an die Clients zur Ausführung der Freischaltung.

2. Verfahren nach Anspruch 1, wobei die zu übermittelnden Daten zwischen der Clientsteuereinrichtung (121) und dem Client (107, 109, 111, 113) zyklisch übermittelt werden.

3. Verfahren nach Anspruch 2, wobei eine Zykluszeit mittels der Clientsteuereinrichtung (121) eingestellt wird.

4. Verfahren nach einem der vorangehenden Ansprüche, wobei die zu übermittelnden Daten in einen Datenframe zusammengepackt werden.

5. Verfahren nach einem der vorangehenden Ansprüche, wobei den zu übermittelnden Daten eine Priorität zugewiesen wird und die Daten abhängig von ihrer Priorität übermittelt werden.

6. Netzwerksystem, mit:
- einem mehrere Access Points aufweisenden drahtlosen Netzwerk (103), mit dem ein oder mehrere Clients (107, 109, 111, 113) drahtlos verbunden sind,
- einem Backbone-Netzwerk (105), an das die Access Points und eine Clientsteuereinrichtung (121) angeschlossen sind,
- wobei die Clients (107, 109, 111, 113) und die Clientsteuereinrichtung (121) Mittel zum Aufbauen jeweils eines Tunnels (123, 125, 127, 129) zwischen der Clientsteuereinrichtung und dem jeweiligen Client über das Backbone-Netzwerk (105), über einen der Access Points und über das drahtlose Netzwerk zum Übermitteln von Daten und jeweils eine Sendeeinrichtung zum Senden von Daten und eine Empfangseinrichtung zum Empfangen von Daten umfassen, wobei die Clientsteuereinrichtung dazu ausgebildet ist, Ethernettelegramme und/oder Ethernetpakete zwischen dem Client und dem Backbone-Netzwerk über den jeweiligen Tunnel zu übermitteln, derart, dass die Clientsteuereinrichtung Ethernettelegramme und/oder Ethernetpakete von dem Client in das Backbone-Netzwerk brückt und die Clientsteuereinrichtung Ethernettelegramme aus dem Backbone-Netzwerk über den Tunnel an den Client zustellt, wobei die Clientsteuereinrichtung logisch gesehen einen Switch mit einem Tunnelendpunkt als Switchport darstellt, wobei der Client (107, 109, 111, 113) eine Erfassungseinrichtung zum Erfassen einer Statusinformation und die Clientsteuereinrichtung (121) eine Auswerteeinrichtung zum Auswerten der Statusinformation aufweisen und die Auswerteeinrichtung ferner derart konfiguriert ist, Steuersignale zum Steuern einer Sendeleistung des Clients (107, 109, 111, 113), einer Roaming-Schwelle oder der zu verwendenden Modulationsarten des Clients (107, 109, 111, 113) abhängig von der ausgewerteten Statusinformation zu erzeugen, und wobei ein Endteilnehmer (131, 133) mit mindestens zwei Clients (107, 109, 111, 113) und damit über die entsprechenden mindestens zwei Tunnel (123, 125, 127, 129) mit der Clientsteuereinrichtung (121) verbunden ist, wobei die Clientsteuereinrichtung (121) dazu ausgebildet ist, zumindest einen der beiden Tunnel (123, 125, 127, 129) für eine Übermittlung von Daten freizuschalten, und wobei die Clientsteuereinrichtung dazu ausgebildet ist, abhängig von Diagnosedaten oder Qualitätsdaten zu entscheiden, welcher der redundanten Tunnel freigeschaltet wird, und abhängig von dieser Entscheidung entsprechende Steuersignale an die jeweiligen Clients zu senden.

7. Computerprogramm mit Programmcode zur Ausführung des Verfahrens nach einem der Ansprüche 1 bis 5, wenn das Computerprogramm auf einem Computer ausgeführt wird.

## Claims

1. A method for controlling a network system (101), the network system (101) comprising a wireless network (103) including a plurality of access points to which one or more clients (107, 109, 111, 113) are connected wirelessly,
and a backbone network (105) to which the access points and a client control device are connected, comprising the steps of:
- establishing tunnels (123, 125, 127, 129) between the client control device (121) and a respective client (107, 109, 111, 113) via the backbone network (105), via one of the access points and via the wireless network for transferring data;
- receiving, by the client control device, Ethernet telegrams and/or Ethernet packets transmitted by the client via the tunnel, and bridging the Ethernet telegrams and/or Ethernet packets into the backbone network;
- receiving, by the client control device, Ethernet telegrams from the backbone network, and delivering the Ethernet telegrams to the client via the tunnel;
wherein in logical terms the client control device is a switch with a tunnel end point as a switch port;
- transmitting status information from the client (107, 109, 111, 113) to the client control device (121) via the tunnel (123, 125, 127, 129);
- evaluating the transmitted status information by the client control device (121);
- transmitting, in dependence of the evaluated status information, a control signal for controlling a transmission power of the client (107, 109, 111, 113), a roaming threshold, or the types of modulation to be used by the client (107, 109, 111, 113), from the client control device (121) to the client (107, 109, 111, 113) via the tunnel (123, 125, 127, 129);
- connecting an end subscriber (131, 133) to at least two clients and thus, via the corresponding at least two tunnels, to the client control device (121);
- deciding, by the client control device, to enable one of the redundant tunnel connections on the basis of diagnostic data or quality data for transmitting data from the end subscriber to a receiver in the backbone network;
- transmitting control signals to the clients for executing the enabling.

2. The method according to claim 1, wherein the data to be transferred between the client control device (121) and the client (107, 109, 111, 113) are transferred cyclically.

3. The method according to claim 2, wherein a cycle time is set using the client control device (121).

4. The method according to any one of the preceding claims, wherein the data to be transferred are packed into a data frame.

5. The method according to any one of the preceding claims, wherein a priority is assigned to the data to be transferred, and the data are transferred depending on their priority.

6. A network system, comprising:
- a wireless network (103) including a plurality of access points, to which one or more clients (107, 109, 111, 113) are connected wirelessly;
- a backbone network (105) to which the access points and a client control device (121) are connected;
- wherein the clients (107, 109, 111, 113) and the client control device (121) comprise means for establishing a respective tunnel (123, 125, 127, 129) between the client control device and the respective client via the backbone network (105) via one of the access points and via the wireless network for transferring data, and a respective transmitter for transmitting data and a receiver for receiving data, wherein the client control device is configured to transfer Ethernet telegrams and/or Ethernet packets between the client and the backbone network via the respective tunnel in such a manner that the client control device bridges Ethernet telegrams and/or Ethernet packets from the client into the backbone network and the client control device delivers Ethernet telegrams from the backbone network to the client via the tunnel, wherein in logical terms the client control device represents a switch with a tunnel end point as a switch port, wherein the client (107, 109, 111, 113) has a detection means for detecting a status information and the client control device (121) has an evaluation means for evaluating the status information, and wherein the evaluation means is further configured to generate, in dependence of the evaluated status information, control signals for controlling a transmission power of the client (107, 109, 111, 113), a roaming threshold, or the types of modulation to be used by the client (107, 109, 111, 113);
and wherein an end subscriber (131, 133) is connected to at least two clients (107, 109, 111, 113) and thus to the client control device (121) via the corresponding at least two tunnels (123, 125, 127, 129), wherein the client control device (121) is configured to enable at least one of the two tunnels (123, 125, 127, 129) for a transfer of data, and wherein the client control device is configured to decide, on the basis of diagnostic data or quality data, which one of the redundant tunnels will be enabled, and to transmit, on the basis of this decision, corresponding control signals to the respective clients.

7. A computer program, comprising program code for performing the method according to any one of claims 1 to 5 when the computer program is executed on a computer.

## Revendications

1. Procédé de commande d'un système de réseau (101), dans lequel le système de réseau (101) comprend un réseau sans fil (103) présentant plusieurs points d'accès et auquel un ou plusieurs clients (107, 109, 111, 113) sont connectés sans fil,
ainsi qu'un réseau fédérateur (105), auquel les points d'accès et un système de commande client sont raccordés, le procédé comprenant les étapes suivantes :
- l'installation de tunnels (123, 125, 127, 129) entre le système de commande client (121) et respectivement un client (107, 109, 111, 113) par l'intermédiaire du réseau fédérateur (105), par l'intermédiaire d'un des points d'accès et par l'intermédiaire du réseau sans fil pour la transmission de données,
- la réception par le système de commande client de télégrammes Ethernet et/ou de paquets Ethernet transmis par le client au moyen du tunnel et le pontage des télégrammes Ethernet et/ou des paquets Ethernet dans le réseau fédérateur ;
- la réception par le système de commande client de télégrammes Ethernet provenant du réseau fédérateur et la délivrance des télégrammes Ethernet au client au moyen du tunnel ;
dans lequel le système de commande client représente logiquement un commutateur réseau pourvu d'un point terminaison de tunnel comme port de commutation,
- l'émission d'une information de statut par le client (107, 109, 111, 113) au système de commande client (121) par l'intermédiaire du tunnel (123, 125, 127, 129) ;
- l'évaluation de l'information de statut transmise au moyen du système de commande client (121) ;
- l'émission d'un signal de commande dépendant de l'information de statut évaluée pour la commande d'une puissance d'émission du client (107, 109, 111, 113), d'un seuil d'itinérance ou des types de modulation du client (107, 109, 111, 113) destinés à être utilisés, par le système de commande client (121) au client (107, 109, 111, 113) par l'intermédiaire du tunnel (123, 125, 127, 129) ;
- la connexion d'un participant final (131, 133) à au moins deux clients et donc, par l'intermédiaire au moins des deux tunnels correspondants, au système de commande client (121) ;
- la décision, par le système de commande client, de libérer l'une des connexions tunnel redondantes sur la base de données de diagnostic ou de données de qualité pour la transmission de données du participant final à un récepteur dans le réseau fédérateur ;
- l'émission de signaux de commande aux clients pour la mise en oeuvre de la libération.

2. Procédé selon la revendication 1, dans lequel les données à transmettre sont transmises de manière cyclique entre le système de commande client (121) et le client (107, 109, 111, 113).

3. Procédé selon la revendication 2, dans lequel un temps de cycle est réglé au moyen du système de commande client (121).

4. Procédé selon l'une quelconque des revendications précédentes, dans lequel les données à transmettre sont mises en paquet dans une trame de données.

5. Procédé selon l'une quelconque des revendications précédentes, dans lequel une priorité est allouée aux données à transmettre et les données sont transmises en fonction de leur priorité.

6. Système de réseau, comprenant :
- un réseau sans fil (103) présentant plusieurs points d'accès et auquel un ou plusieurs clients (107, 109, 111, 113) sont connectés sans fil,
- un réseau fédérateur (105), auquel les points d'accès et un système de commande client (121) sont raccordés,
- dans lequel les clients (107, 109, 111, 113) et le système de commande client (121) comportent des moyens pour l'installation de respectivement un tunnel (123, 125, 127, 129) entre le système de commande client et le client respectif par l'intermédiaire du réseau fédérateur (105), par l'intermédiaire d'un des points d'accès et par l'intermédiaire du réseau sans fil pour la transmission de données et respectivement un système d'émission pour l'émission de données et un système de réception pour la réception de données, dans lequel le système de commande client est conçu pour transmettre des télégrammes Ethernet et/ou des paquets Ethernet entre le client et le réseau fédérateur par l'intermédiaire du tunnel respectif, de telle manière que le système de commande client ponte les télégrammes Ethernet et/ou les paquets Ethernet du client dans le réseau fédérateur et que le système de commande client délivre les télégrammes Ethernet provenant du réseau fédérateur au client par l'intermédiaire du tunnel, dans lequel le système de commande client représente logiquement un commutateur pourvu d'un point terminaison de tunnel comme port de commutation, dans lequel le client (107, 109, 111, 113) comprend un système de détection pour la détection d'une information de statut et le système de commande client (121) comprend un système d'évaluation pour l'évaluation de l'information de statut et le système d'évaluation est configuré en outre de manière à générer des signaux de commande pour la commande d'une puissance d'émission du client (107, 109, 111, 113), d'un seuil d'itinérance ou des types de modulation du client (107, 109, 111, 113) destinés à être utilisés en fonction de l'information de statut évaluée, et dans lequel un participant final (131, 133) est connecté à au moins deux clients (107, 109, 111, 113) et donc, par l'intermédiaire au moins des deux tunnels (123, 125, 127, 129) correspondants, au système de commande client (121), dans lequel le système de commande client (121) est conçu pour libérer au moins l'un des deux tunnels (123, 125, 127, 129) pour une transmission de données, et dans lequel le système de commande client est conçu pour décider en fonction des données de diagnostic ou des données de qualité lequel des tunnels redondants est libéré, et pour envoyer, en fonction de cette décision, des signaux de commande correspondants aux clients respectifs.

7. Programme informatique comprenant un code de programme pour la mise en oeuvre du procédé selon l'une quelconque des revendications 1 à 5, lorsque le programme informatique est exécuté sur un ordinateur.
